# EUROPÄISCHE PATENTSCHRIFT

(11) **EP 2 394 510 B1**
(45) Veröffentlichungstag und Bekanntmachung des Hinweises auf die Patenterteilung: **28.03.2018**
(21) Anmeldenummer: 11169416.2
(22) Anmeldetag: 10.06.2011
(51) Int. Cl.: A01K 39/012

(54) **Futtereinrichtung für Geflügel**
Feeding device for poultry
Dispositif d'alimentation pour volaille

(30) Priorität: 10.06.2010 DE 102010029950
(43) Veröffentlichungstag der Anmeldung: 14.12.2011
(73) Patentinhaber: Big Dutchman International GmbH, 49377 Vechta-Calveslage (DE)
(72) Erfinder: Bullermann, Siegbert, 26169 Friesoythe (DE)
(74) Vertreter: Eisenführ Speiser

(56) Entgegenhaltungen:
- EP-A1- 1 342 409
- EP-A1- 1 554 930
- AU-B2- 692 972
- US-A- 3 827 405
- US-A- 5 927 232

## Beschreibung

Die vorliegende Erfindung betrifft eine Futtereinrichtung für Geflügel, insbesondere Hühner, mit einem Zuführ-Verteiler, einer Futterschale und einer die Futterschale teilweise verschließenden Hygiene-Glocke, wobei zwischen der Hygiene-Glocke und der Futterschale ein Volumen zum Futtertransport aufgespannt ist. Futtereinrichtungen der vorstehend genannten Art kommen vorwiegend in Ställen von Betrieben in der Geflügelaufzucht zum Einsatz. Die Futtergewohnheiten und Verhaltensmechanismen unterschiedlicher Geflügelarten unterscheiden sich mitunter deutlich voneinander, so dass sich für verschiedene Geflügelarten separat entwickelte Futter- und Aufzuchtsysteme etabliert haben. Aus diesem Grund betrifft die vorliegende Erfindung insbesondere eine Futtereinrichtung zur Aufzucht von Hühnern. Die in solchen Aufzuchtbetrieben zum Einsatz gebrachten Futtereinrichtungen sind üblicherweise Teil eines Futter-Systems, in dem von einem Futtersilo aus Nahrung in ein gebäudeinneres Verteilersystem eingeleitet wird. Das Verteilersystem, welches typischerweise aus im Wesentlichen horizontal angeordneten Rohrleitungen besteht, verteilt das eingeleitete Futtermittel auf eine Vielzahl von Futtereinrichtungen innerhalb des Gebäudes. Der Aufstellungsort der Futtereinrichtungen ist hierbei üblicherweise so gewählt, dass die Fläche des Gebäudes gleichmäßig mit Futtereinrichtungen versehen wird, so dass die Verteilung der zu fütternden Tiere in etwa gleichmäßig erfolgt.

Zum Füttern der oftmals noch kleinen Tiere sind die Futtereinrichtungen im Betrieb in Bodennähe abgesenkt. Da es bei Geflügel häufig vorkommt, dass Tiere während des Aufnehmens von Nahrung in die Futterschalen zu steigen versuchen, haben sich sogenannte Hygiene-Glocken durchgesetzt, die einen Teil der Futterschale überspannen, so dass lediglich ein im Wesentlichen ringförmiger Spalt zwischen der Hygiene-Glocke und einem äußeren Rand der Futterschale übrig bleibt.

Bei bekannten Futtereinrichtungen sind die Futterschalen mittels eines Drahtgestänges mit einem Zuführverteiler verbunden, der seinerseits an ein Rohr des Futterleitungssystems angeschlossen ist.

Trotz des Anbringens der Hygiene-Glocken kommt es im Betrieb durch den Kontakt des Geflügels mit der Futtereinrichtung im Laufe der Zeit zu Keimbildung. Eine Reinigung wird notwendig. Hierzu muss bei den bekannten Futtereinrichtungen die Futterschale zunächst von dem Drahtgestänge gelöst werden, um dann entfernt werden zu können. Das Entfernen der Futterschale und Vorbereiten der Futtereinrichtung zum anschließenden Reinigen erfordert von einem Bediener mitunter hohen Krafteinsatz und dauert pro Futterschale typischerweise zwanzig bis dreißig Sekunden. Die Zeit zum Vorbereiten aller Futtereinrichtungen in einer Stellung mit üblicherweise bis zu tausend Futterschalen oder sogar noch mehr erfordert eine geraume Zeit. Zudem ist die Arbeit anstrengend. Je länger die Reinigung dauert, desto länger ist auch der Zeitraum, in dem das Geflügel außerhalb der Stallung untergebracht sein muss, was organisatorische Probleme nach sich zieht. Nach vollzogener Vorbereitung der Futtereinrichtungen zur Reinigung werden diese mittels Hochdruckreinigern ausgespritzt.

Der Rest der Futtereinrichtung muss gegebenenfalls im Anschluss an den Reinigungsvorgang zusätzlich von dem Leitungs-System demontiert und noch weiter in Einzelteile zerlegt werden, so dass eine Reinigung des Inneren vollständig erfolgen kann.

Durch konstruktionsbedingte Toträume und Material-Hinterschneidungen ist es bei den bekannten Futtereinrichtungen aufwändig, eine befriedigende Reinigung zu erreichen. Dies, und dass die Demontage aufgrund der hohen Teilezahl umständlich durchzuführen ist, wird im Stand der Technik als Nachteil angesehen.

US 3 827 405 A offenbart eine Futtereinrichtung für Geflügel, die eine Futterschale und eine Hygiene-Glocke aufweist. Die Hygiene-Glocke und die Futterschale sind über zwei Drahtbügel miteinander verbunden, wobei die Drahtbügel jeweils über Gelenke an der Futterschale und auch gelenkig an zu beiden Seiten der Hygiene-Glocke angeordnete Befestigungskulissen aufgenommen sind.

Aus US 5 927 232 A ist hingegen eine Futtereinrichtung für Geflügel mit einem Zuführverteiler, einer Futterschale und einer die Futterschale teilweise verdeckenden Hygiene-Glocke bekannt. Die Futterschale ist unmittelbar mit dem Zuführverteiler gekoppelt, wobei die Hygiene-Glocke über einen am Zuführverteiler angeordneten Rastmechanismus in verschiedenen Höhen zur Futterschale befestigt werden kann.

Hiervon ausgehend war es die Aufgabe der vorliegenden Erfindung, eine Futtereinrichtung anzugeben, die mit einer möglichst vereinfachten Handhabung die vorgefundenen Nachteile im Stand der Technik möglichst weitgehend abmildert.

Die Erfindung löst die ihr zu Grunde liegende Aufgabe, indem die Futterschale eingelenkig mit der Hygiene-Glocke verbindbar, insbesondere in die Hygiene-Glocke einhängbar ist. Die Erfindung basiert hierbei auf dem Gedanken, dass sich eine bessere Handhabbarkeit durch eine Vereinfachung der Teile-Struktur der Futtereinrichtung erreichen lässt. Eine Reduzierung der Anzahl benötigter Bauteile führt dazu, dass weniger Teile gereinigt werden müssen, und im Übrigen die Montage und Demontage einfacher durchzuführen ist. Es hat sich hierbei als besonders vorteilhaft herausgestellt, die Futterschale unmittelbar mit der Hygiene-Glocke zu verbinden, weil hierdurch nicht nur das bekannte Drahtgestänge oder weitere externe Fixierungsmittel wegfallen können, sondern auch - bei erfindungsgemäßer Ausprägung - die Montage, Demontage und der Betrieb der erfindungsgemäßen Futtereinrichtung verbessert werden. Vorzugsweise lässt sich die Futterschale über ein eingelenkiges Scharnier in die Hygiene-Glocke einhängen. Das Scharnier kann hierbei als Haken in der Futterschale ausgebildet sein, der einen in der Hygiene-Glocke angeordneten Dorn umgreift, oder umgekehrt. Eine solche Anordnung hätte auch aufgrund ihrer Einfachheit den Vorteil, dass sie einfach reinigbar ist, und wenig bis keine Toträume verbleiben, in denen sich Keime einnisten können. Ein weiterer Vorteil des eingelenkigen Verbindens der Futterschale in der Hygiene-Glocke ist weiterhin darin zu sehen, dass die Bereiche, in denen die Futterschale mit der Hygiene-Glocke verbunden wird, im Inneren der Hygiene-Glocke und somit außerhalb des Bereiches des Geflügels angeordnet sind. Auf diese Weise gelingt es dem Geflügel nicht, den Verbindungsbereich zwischen Futterschale und Hygiene-Glocke zu berühren, mithin zu verschmutzen oder sogar zu beschädigen. Dies wirkt sich ebenfalls positiv auf die Reinigbarkeit und auch auf die Haltbarkeit der Futtereinrichtung aus.

Ferner weist die erfindungsgemäße Futtereinrichtung einen Rastmechanismus zur formschlüssigen Verbindung der Futterschale mit der Hygiene-Glocke auf. Der Rastmechanismus kann hierbei außerhalb, besonders vorteilhaft allerdings innerhalb der Hygiene-Glocke angeordnet sein. Auf diese Weise ist auch der Rast-Mechanismus dem Zugriff des Geflügels entzogen. Der Rastmechanismus dient erfindungsgemäß zum Fixieren der Futterschale in der eingehängten Position. Die Ausführung des Rastmechanismus als einteiliges Element trägt weiterhin dazu bei, dass die Futterschale einhändig von der Futtereinrichtung getrennt werden kann, nämlich indem der Rastmechanismus betätigt wird. Hierdurch gelangt die Futterschale außer Eingriff und muss nur noch aus der eingelenkigen Verbindung mit der Hygiene-Glocke gelöst werden. Am beispielhaften Fall, dass die Futterschale in die Hygiene-Glocke eingehängt ist, wird anschaulich, dass die Demontage einhändig durch Aushängen der Futterschale ausführbar ist. Das einhändige Aushängen der Futterschale kann dadurch erreicht werden, dass mit einer Hand die Futterschale untergriffen wird und gegebenenfalls sogar mit nur einem Finger aus ihrer fixen Position gelöst wird. Durch die eingelenkige Verbindung der Futterschale mit der Hygiene-Glocke klappt die Futterschale dann nach unten. Dieser Vorgang erfordert so gut wie keine Kraft von dem Bediener und ist in 2, maximal 3 Sekunden abgeschlossen. Unter Berücksichtigung der Größe einer Stallung mit teilweise mehr als eintausend Futtereinrichtungen ist ersichtlich, wie stark sich diese Zeitersparnis auf die gesamte Dauer eines Reinigungsvorgangs auswirkt. Die Belastung sowohl für den Bediener, den Reiniger als auch für das Geflügel selber wird hierdurch deutlich vermindert. Es ist auf einfache Weise durchführbar, zunächst alle Futtereinrichtungen durch Aushängen, beziehungsweise Öffnen der Futterschale vorzubereiten und dann in einem Arbeitsgang mit einem Hochdruckreiniger alle Futtereinrichtungen nacheinander zu säubern.

In noch einer vorteilhaften Weiterbildung der Erfindung weist der Rastmechanismus eine einstückig in der Hygiene-Glocke ausgebildete Rastfeder und eine einstückig in der Futterschale eingebildete Rastaufnahme auf. Diese Weiterbildung der Erfindung bringt den Vorteil mit sich, dass der Rastmechanismus, bestehend aus der einstückig in der Hygiene-Glocke ausgebildeten Rastfeder sowie der einstückig in der Futterschale ausgebildeten Rastaufnahme, noch eine weitere Teilereduzierung ermöglicht. Nach dem Demontieren der Futtereinrichtung in ihre Einzelteile stellt der Rastmechanismus kein gesondertes Bauteil dar, sondern ist jeweils in der Hygiene-Glocke und der Futterschale einstückig ausgeformt. Ein weiterer Vorteil dieser Ausgestaltung liegt darin, dass die Rastaufnahme unterhalb der Futterschale einstückig ausgebildet sein kann, wodurch diese durch ein einhändiges Untergreifen der Futterschale gelöst werden kann, ohne dass mit den Händen in das Innere der Futterschale eingegriffen werden muss. Dadurch wird auch die Gefahr reduziert, dass eine Person während der Demontage mit Keimen in der Futterschale in Verbindung gerät. Zudem ist die Rastaufnahme bei einer solchen Anbringung im Betrieb der bodennahen Futtereinrichtung noch besser vor dem Zugriff des Geflügels geschützt. Beim Reinigen der Futtereinrichtung in ihren Einzelteilen wird der Rastmechanismus automatisch mitgereinigt, ohne dass er als besonderes Bauteil separate Berücksichtigung finden muss.

Gemäß einer bevorzugten Ausführungsform der erfindungsgemäßen Futtereinrichtung sind innerhalb des Volumens zwischen der Futtereinrichtung und der Hygiene-Glocke mehrere Abstandshalter angeordnet. Die Abstandshalter dienen hierbei einerseits als Stütz-Struktur und stabilisieren das Volumen zwischen der Hygiene-Glocke und der Futterschale gegen mechanische Belastung. Dadurch, dass das Volumen stabil gehalten wird, tritt eine geringere Schwankung im Futtermittelstrom auf. Eine mechanische Belastung des Volumens von außen könnte beispielsweise darin zu sehen sein, dass die Futtereinrichtung auf einen unebenen Boden abgesenkt wird, wodurch sich die Futterschale gegenüber der Hygiene-Glocke ohne das Aufweisen von Abstandshaltern verschränken könnte. Andererseits tragen die Abstandshalter dazu bei, dass der Volumenstrom zugeführten Futtermittels gleichmäßig entlang des Umfangs der Futterschale verteilt wird.

Gemäß einer weiteren bevorzugten Ausführungsform der Erfindung sind die Abstandshalter in unterschiedlichen Längen ausgeführt und in zwei oder mehreren Gruppen jeweils gleicher Abstandshalter einander zugeordnet. Unter dem Begriff der Länge wird hierbei die Erstreckung der Abstandshalter zwischen Futterschale und der Hygiene-Glocke verstanden. Die Unterteilung der Abstandshalter in verschiedene Gruppen wird so verstanden, dass jeder Abstandshalter mit einer bestimmten Länge unmittelbar einen bestimmten Abstand zwischen Futterschale und Hygiene-Glocke bedingt. Mit dem Verändern des Abstands zwischen der Hygiene-Glocke und der Futterschale wird hingegen das Volumen zwischen den beiden Bauteilen vergrößert oder verkleinert. Ein größeres Volumen führt zu einem größeren Durchfluss an Futtermittel, während ein verkleinertes Volumen genau das Gegenteilige hiervon bewirkt. Die Zuordnung der Abstandshalter in Gruppen jeweils gleicher Länge bringt mit sich, dass je eine Gruppe gleichlanger Abstandshalter die Positionierung der Futterschale von der Hygiene-Glocke in einem für die jeweilige Gruppe bestimmten Abstand bewirkt. Ein wesentlicher Vorteil der Möglichkeit, verschiedene Abstände zwischen Hygieneglocke und Futterschale vorzusehen, liegt auch darin, dass der Futtermittelstrom in Abhängigkeit von der Grobkörnigkeit des Futtermittels einstellbar ist. Aufgrund der eingangs erwähnten Problematik, dass beim Einströmen von Futtermittel in eine Vielzahl von Futtereinrichtungen zunächst die stromaufwärts gelegenen Futtereinrichtungen gefüllt werden, während die hinteren Futtereinrichtungen leer sind, ist es notwendig, immer möglichst wenig Futtermittel in den Futterschalen zu bevorraten, damit eine einzelne Futterschale schneller gefüllt ist und somit auch die letzte Futterschale in einer Reihe von Futtereinrichtungen zu einem früheren Zeitpunkt mit Futtermittel gefüllt ist als wenn das Volumen innerhalb einer Futterschale jeweils vergleichsweise groß wäre. Zu beachten ist hierbei, dass das Futtermittel durch ein Rohleitungssystem mit beschränktem Querschnitt befördert werden muss und hier nach oben gewisse Grenzen hinsichtlich der Futterkapazität gegeben sind. Durch die Einstellbarkeit des Volumens zwischen der Hygiene-Glocke und der Futterschale ist allerdings für verschiedene Körnungen des Futtermittels immer gewährleistet, dass ein minimaler Durchfluss von Futtermittel einstellbar ist, der immer zu einem möglichst geringem Futterstand innerhalb der Futterschale führt. Auf diese Weise können massenhafte Tierbewegungen innerhalb der Stallung weitestgehend unter Kontrolle gehalten werden.

Gemäß einer weiteren bevorzugten Ausführungsform sind die Abstandshalter in einem konischen Abschnitt in der Futterschale angeordnet, und eine Gruppe der Abstandshalter ist formschlüssig mit korrespondierenden Abständen der Hygiene-Glocke in Eingriff bringbar, während die restlichen Abstandshalter außer Eingriff mit dem korrespondierenden Abschnitten sind. Hieraus ergibt sich, dass die Anzahl korrespondierender Abschnitte geringer ist als die Gesamtanzahl von Abstandshaltern in der Futtereinrichtung. Vorzugsweise entspricht die Anzahl korrespondierender Abschnitte exakt der Anzahl von Abstandshaltern innerhalb einer Gruppe. Weiter bevorzugt ist es, wenn die verschiedenen Gruppen jeweils gleich viele Abstandshalter aufweisen. Durch Ineingriffbringen jeweils einer Gruppe Abstandshalter mit den korrespondierenden Abschnitten in der Hygiene-Glocke lässt sich auf vorteilhafte Weise in verschiedenen Stufen der Abstand zwischen der Futterschale und der Hygiene-Glocke variieren. Den nicht im Eingriff befindlichen Abstandshaltern der jeweils anderen Gruppen steht in montiertem Zustand kein korrespondierender Abschnitt gegenüber, weshalb die außer Eingriff befindlichen Abstandshalter keinen Einfluss auf die Positionierung der Futterschale relativ zur Hygiene-Glocke haben.

Ein Vorteil der Ausführung mit einem komischen Abschnitt ist auch in einem gleichmäßigen Futtertransport zu sehen. Das Futtermittel gleitet auf einer gleichförmigen Steigung in die Schale hinein.

Die Abstandshalter können in einer bevorzugten Weiterbildung als Stege oder Zapfen ausgebildet sein. Vorteilhafterweise erstrecken sich die Stege in im Wesentlichen radialer Richtung entlang des Inneren des Volumens und sind gleichmäßig über den Umfang verteilt.

Es wird weiterhin bevorzugt, dass die Abstandshalter eine Positionierhilfe aufweisen, insbesondere in Form eines Zentrier-Vorsprungs. Ein solcher Zentrier-Vorsprung, der in Form einer auf der Stirnseite der Abstandshalter und/oder der korrespondierenden Abschnitte angeordnet sein kann, greift hierbei vorteilhafterweise in einen korrespondierend negativ ausgeformten Bereich am jeweils anderen Teil, wodurch die Abstandshalter mit hoher Wiederholgenauigkeit relativ zu den korrespondierenden Abschnitten positionierbar sind. Somit lässt sich für jede Stufe des Abstands zwischen Futterschale und Hygiene-Glocke zuverlässig auch die Arretierung gewährleisten, da bei entsprechender Auslegung der Positionierhilfen eine Arretierung der Futterschale in der Hygiene-Glocke nur dann möglich ist, wenn die Abstandshalter korrekt positioniert sind.

Gemäß einer vorteilhaften Weiterbildung der erfindungsgemäßen Futtereinrichtung sind für jede Stufeneinstellung des Abstands zwischen der Futterschale und der Hygiene-Glocke in einer Gruppe drei oder mehr Abstandshalter vorgesehen, die vorzugsweise gleichmäßig entlang des Umfangs der Futterschale angeordnet sind. Das besonders bevorzugte Vorsehen von drei Abstandshaltern je Gruppe ist ausreichend, um die Position der Futterschale eindeutig relativ zur Hygiene-Glocke zu definieren, und gleichzeitig durch die geringe Anzahl der Abstandshalter eine möglichst geringe Beeinflussung des Volumenstroms von Futtermittel innerhalb des Volumens zwischen Futterschale und Hygiene-Glocke. Außerdem sorgt eine geringere Anzahl an Haltern für eine noch weiter verbesserte Reinigbarkeit der Bauteile. Je größer das Verhältnis gleichmäßiger Flächen zu Vorsprüngen oder Flächenänderungen entlang einer Oberfläche ist, desto einfacher gestaltet sich die Reinigung eines Bauteils. Für den Fall, dass an die Stabilität der Futtereinrichtung die Anforderungen gestellt sind, kann allerdings auch das Vorsehen von mehr als drei Abstandshaltern je Gruppe sinnvoll sein. Zugunsten besserer Reinigbarkeit können in einem solchen Fall bis zu einem bestimmten Ausmaß Einschränkungen hinsichtlich der Reinigbarkeit hingenommen werden.

In einer weiteren bevorzugten Ausführungsform der erfindungsgemäßen Futtereinrichtung weist die Hygiene-Glocke einen konischen Abschnitt auf, in welchem die mit den Abstandshaltern korrespondierenden Abschnitte angeordnet sind. Hinsichtlich des Vorteils einer konisch ausgebildeten Hygiene-Glocke ist festzustellen, dass Tiere, welche sich der Futtereinrichtung nähern, bisweilen trotz Anbringens der Hygiene-Glocke versuchen, in das Innere der Futterschale zu gelangen. Dies führt unweigerlich dazu, dass sie versuchen, die Hygiene-Glocke zu erklimmen. Für den vorteilhaften Fall, dass die Hygiene-Glocke konisch ausgebildet ist, gelingt es den Tieren allerdings nicht, auf der Glocken- Oberfläche Halt zu fassen. Somit bleibt die Glocke und in der Folge auch die Futterschale in höherem Maße frei von Beschädigungen und Verschmutzung. Ein weiterer Vorteil der Ausbildung der Hygiene-Glocke in konischer Form inklusive des Abschnitts, in dem die mit dem Abstandshaltern korrespondierenden Abschnitte angeordnet sind, ist derjenige, dass das Volumen für den Futterstrom gebildet wird von zwei Flächenbereichen mit ähnlicher Ausprägung. Sowohl die Futterschale als auch die Hygiene-Glocke sind in dem Bereich, wo die Abstandshalter und deren korrespondierende Abschnitte angeordnet sind, konisch ausgebildet. Dies gewährleistet einen gleichmäßigen Futterstrom, siehe auch die vorstehenden Erläuterungen zur Futterschale. Die vorgeschlagene Futtereinrichtung sieht weiterhin in einer bevorzugten Ausführungsform vor, dass der Zuführ-Verteiler als T-Stück ausgebildet ist mit zwei horizontalen Öffnungen zum Anschluss an eine Futtermittel-Leitung sowie mit einer vertikalen Öffnung zur Zuleitung von Futtermittel in Richtung der Futterschale, und zwei formschlüssig verbindbare Hälften aufweist.
Diese Ausführungsform wird besonders vorteilhaft dadurch weitergebildet, dass eine untere Hälfte des Zuführ-Verteilers einstückig in einem oberen Abschnitt der Hygiene-Glocke ausgeformt ist. Hierdurch wird dem erfindungsgemäßen Sinne eine weitere Vereinfachung der Teile-Struktur erzielt. Der Zuführ-Verteiler, der in vorbekannten Einrichtungen zumeist aus zwei zusätzlichen Bauteilen bestand, die schellenartig um eine Futtermittelleitung herum angeordnet werden mussten, und an den im Anschluss dann noch eine Zuleitung zur Futterschale und gegebenenfalls eine Hygiene-Glocke angeschlossen werden musste, ist gemäß dieser vorteilhaften Ausführungsform mit seiner unteren Hälfte einstückig in der Hygiene-Glocke ausgebildet. So verbleibt lediglich ein zusätzliches Bauteil, was die obere Hälfte des Zuführ-Verteilers darstellt. Ein weiterer Vorteil der Ausbildung des unteren Abschnitts des Zuführ-Verteilers in einem oberen Abschnitt der Hygiene-Glocke wird darin gesehen, dass ein stufenloser und behinderungsfreier Übergang von Futtermittel aus dem Zuführ-Verteiler in das Volumen zwischen Hygiene-Glocke und Futterschale erfolgen kann. Hierdurch kann es auch im oberen Bereich der Hygiene-Glocke nicht mehr zu Ablagerungen von Futtermittel und dadurch entstehenden Verunreinigungen kommen.
Die erfindungsgemäße Futtereinrichtung ist bevorzugt dreiteilig aufgebaut, wobei der Aufbau eine obere Hälfte des Zuführ- Verteilers, die mit der oberen Hälfte formflüssig verbindbare Hygiene-Glocke und die mit der Hygiene-Glocke gelenkig verbindbare und mit dieser verrastbare Futterschale umfasst. Vorteilhaft umfasst die Futtereinrichtung lediglich drei Bauteile, die auf einfache Art und Weise einhändig miteinander verbindbar und voneinander trennbar sind.

Es wird weiterhin besonders bevorzugt, dass die Futtereinrichtung vollständig aus Kunststoff, insbesondere aus Polycarbonat, Polypropylen, Polyethylen, oder Polyurethan besteht. Darin, dass die Bauteile der Futtereinrichtung sämtlich aus den vorstehend genannten Kunststoffen bestehen, ist daran zu sehen, dass diese Kunststoffe autoklavierbar sind. Durch die Reinigung in einem Autoklaven lassen sich sämtliche Keime, die im Betrieb der Futtereinrichtung dieser anhaften können, entfernen. Darüber hinaus lassen sich die Einzelteile der Futtereinrichtung aus Kunststoff kostengünstig in großen Stückzahlen fertigen, beispielsweise durch Spritzgussverfahren.

Im Folgenden wird die Erfindung anhand bevorzugter Ausführungsbeispiele und unter Bezugnahme auf die nachfolgenden Figuren näher beschrieben. Hierbei zeigen:
- Figur 1: eine perspektivische Darstellung der erfindungsgemäßen Futtereinrichtung in einer bevorzugten Ausführungsform;
- Figur 2: eine perspektivische Darstellung einer Hygiene-Glocke gemäß einer bevorzugten Ausführungsform der Erfindung;
- Figur 3: eine perspektivische Darstellung einer Futterschale gemäß einer bevorzugten Ausführungsform der Erfindung;
- Figur 4: eine perspektivische Darstellung einer oberen Hälfte eines Zuführ-Verteilers gemäß einer Ausführungsform der vorliegenden Erfindung;
- Figur 5: eine perspektivische Darstellung einer Hygiene-Glocke gemäß einer bevorzugten Ausführungsform der vorliegenden Erfindung;
- Figur 6: eine perspektivische Darstellung einer weiteren Hygiene-Glocke in einer alternativen bevorzugten Ausführungsform der erfindungsgemäßen Futtereinrichtung;
- Figur 7: eine perspektivische Darstellung einer Futterschale gemäß einer alternativen bevorzugten Ausführungsform der erfindungsgemäßen Futtereinrichtung; und
- Figur 8: eine weitere perspektivische Darstellung einer Futterschale gemäß der erfindungsgemäßen Futtereinrichtung.

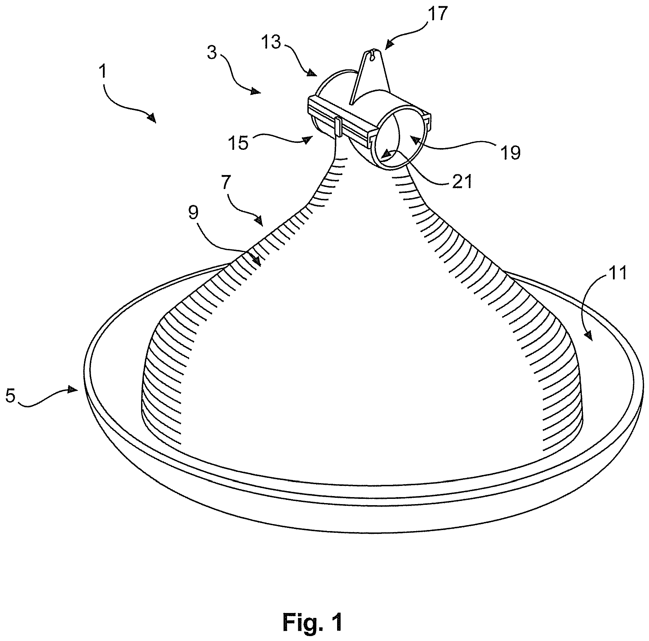

Die erfindungsgemäße Futtereinrichtung 1 ist in zusammengebautem Zustand in Figur 1 abgebildet. Die Futtereinrichtung 1 weist einen Zuführ-Verteiler 3 auf, eine Futterschale 5 und eine Hygiene-Glocke 7. Es ist zu beachten, dass der Zuführ- Verteiler 3 eine obere Hälfte 13 und eine untere Hälfte 15 aufweist, wobei die untere Hälfte 15 einstückig mit der Hygiene-Glocke 7 verbunden ist. Der Zuführ- Verteiler 3 weist weiterhin an der oberen Hälfte 13 angeordnet einen Steg 17 auf. Zwei horizontale Öffnungen 19 zur Zuleitung von Futtermittel sind an dem Zuführ- Verteiler 3 ausgebildet (eine der Öffnungen ist nicht dargestellt). Futtermittel gelangt von den horizontalen Öffnungen 19 durch eine vertikale Öffnung 21 in ein (nicht dargestelltes) Volumen zwischen der Futterschale 5 und der Hygiene-Glocke 7. Die Hygiene-Glocke 7 weist einen konischen Abschnitt 9 auf.

In einem unteren Abschnitt in Figur 1 überlappt die Futterschale 5 die Hygiene-Glocke 7, so dass sich zwischen der Hygiene-Glocke 7 und der Futterschale 5 ein ringförmiger Spalt 11 ausbildet. Der ringförmige Spalt 11 ermöglicht dem zu fütternden Geflügel einen Zugriff auf das vom Zuführ-Verteiler 3 zugeleitete Futtermittel.

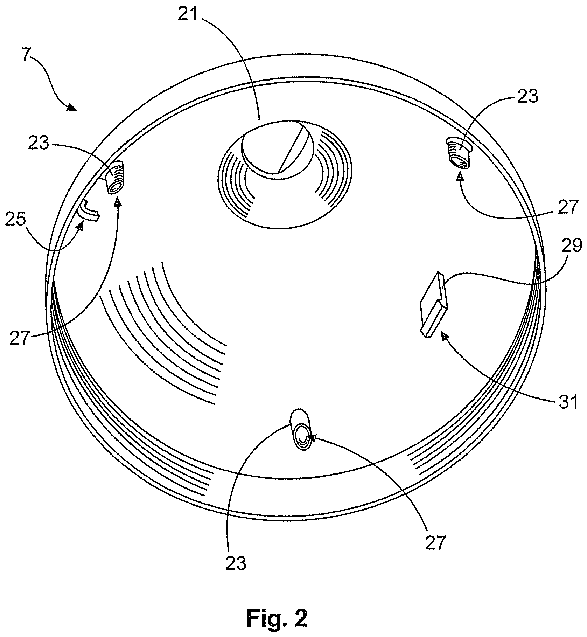

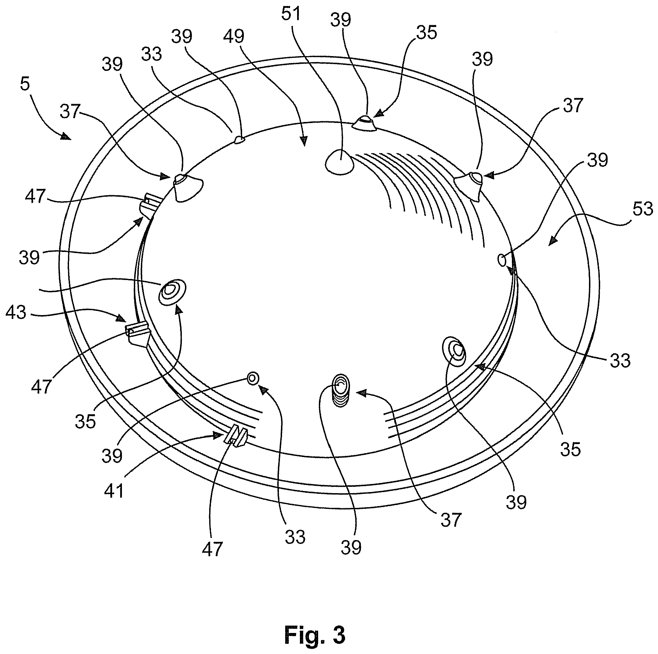

Eine Ausführungsform der Hygiene-Glocke 7 ist perspektivisch und von unten in Figur 2 dargestellt. Die Hygiene-Glocke 7 gemäß Figur 2 weist im Wesentlichen zentral in einem oberen Abschnitt die vertikale Öffnung 21 auf. Insgesamt drei Zapfen 23 sind gleichmäßig entlang des Umfangs im Inneren der Hygiene-Glocke verteilt und weisen jeweils eine konisch geformte Ausnehmung 27 auf. Die Zapfen 23 als korrespondierende Abschnitte zu jeweils einer Gruppe von Abstandshaltern ausgebildet. Die konisch geformten Ausnehmungen 27 dienen hierbei als Positionierhilfen für die Anordnung der Futterschale relativ zu der Hygiene-Glocke 7. Hinsichtlich der Anordnung der Abstandshalter wird an dieser Stelle auf die folgende Figur 3 verwiesen.

Weiterhin in Figur 2 ist ein Haken 25 dargestellt. Der Haken 25 dient als Scharnierelement und ist dazu ausgebildet, eingelenkig mit einer korrespondierenden Scharnieraufnahme in Eingriff gebracht zu werden, vorzugsweise in diese eingehängt zu werden (siehe Figur 3). Von dem Haken 25 aus auf einer gegenüberliegenden Seite der Hygiene-Glocke 7 ist eine Rastfeder 29 angeordnet. Die Rastfeder 29 weist an einem Ende einen Widerhaken 31 auf, der zum Hintergreifen eines korrespondierenden Abschnitts in der Futterschale ausgebildet ist. Die Rastfeder 29 ist in Betriebsstellung der Hygiene- Glocke 7 vertikal nach unten ausgerichtet.

Figur 3 zeigt eine Futterschale 5 mit insgesamt drei Gruppen bestehend aus jeweils drei Abstandshaltern. Eine erste Gruppe umfasst die Abstandshalter 33, eine zweite Gruppe umfasst die Abstandshalter 35 und eine dritte Gruppe umfasst die Abstandshalter 37. Alle Abstandshalter der drei Gruppen 33, 35, 37 weisen jeweils einen konisch ausgebildeten Zentrier-Vorsprung 39 auf. Der Zentrier-Vorsprung 39 ist dazu ausgebildet, in die konischen Ausnehmungen 27 der korrespondierenden Abschnitte 23, welche in Figur 2 als Zapfen dargestellt sind, einzugreifen, um die Position der Futterschale 5 relativ zu der Hygiene-Glocke 7 auf diese Weise zu definieren. Die Höhe der Abstandshalter 33 ist hierbei geringer als die Höhe der Abstandshalter 35. Die Höhe der Abstandshalter 35 ist wiederum geringer als die Höhe der Abstandshalter 37. Die Abstandshalter 33, 35, 37 sind jeweils gleichmäßig entlang des Umfangs der Futterschale in einem konischen Abschnitt 49 angeordnet. Die Anordnung korrespondiert darin jeweils mit der Anordnung der korrespondierenden Abschnitte 23 aus der Hygiene-Glocke 7. Weiterhin sind entlang des Umfangs der Futterschale eine erste Scharnieraufnahme 41, eine zweite Scharnieraufnahme 43 und eine dritte Scharnieraufnahme 45 ausgebildet. Die Scharnieraufnahmen 41, 43, 45 beweisen jeweils einen Scharnierdorn 47 auf, der zur Aufnahme in dem als Haken 25 ausgebildeten Scharnier (siehe Figur 2) eingerichtet ist. Die Scharnier-Aufnahmen 41, 43, 45 sind in unterschiedlicher Höhe jeweils so an der Futterschale 5 angebracht, dass das als Haken 25 ausgebildete Scharnier nur dann mit dem Scharnierdorn 47 in Eingriff bringbar ist, wenn die Abstandshalter der jeweiligen Gruppen in Eingriff mit den korrespondierenden Abschnitten der Hygiene-Glocken stehen. In der in Figur 3 dargestellten Ausführungsform ist die Scharnier-Aufnahme 41 dazu ausgebildet, mit dem Haken 25 in den Eingriff zu gelangen, wenn die Abstandshalter 33 der ersten Gruppe mit den korrespondierenden Abschnitten in Eingriff stehen. Weiterhin ist die Scharnier-Aufnahme 43 zur Aufnahme des Hakens 25 ausgebildet für den Fall, dass die Abstandshalter 35 der zweiten Gruppe mit den korrespondierenden Abschnitten aus der Hygiene-Glocke in Angriff stehen, und die Scharnier-Aufnahme 45 ist zur Aufnahme des Hakens 25 ausgebildet für den Falls, dass die Abstandshalter 39 der dritten Gruppe in Eingriff mit den korrespondierenden Abschnitten 23 der Hygiene-Glocke 7 stehen.

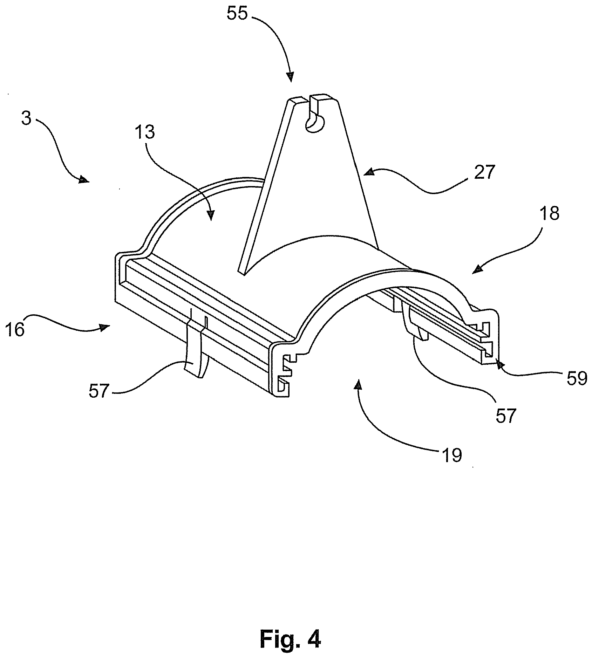

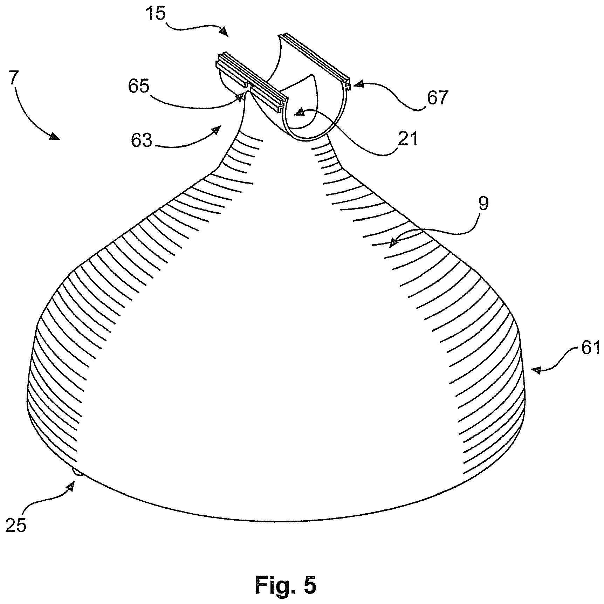

Die obere Hälfte 13 des Zuführ-Verteilers 3 gemäß der Erfindung ist in Figur 4 dargestellt. Die obere Hälfte 13 bildet eine obere Begrenzung der horizontalen Öffnungen 19, durch die Futtermittel in die Futtereinrichtung eingeleitet wird. Der außen auf der oberen Hälfte 13 angeordnete Steg 17 weist eine Zugführung 55 auf. Kabelzüge oder auch elektrische Leitungen können von dieser Zugführung 55 aufgenommen werden, um im Wesentlichen parallel zu dem Futterleitungssystem angeordnet über eine Mehrzahl von Futtereinrichtungen hinweg geführt zu werden. Die obere Hälfte 13 des Zuführ-Verteilers 3 weist am jeweils äußeren Ende von Umfangs-Flächen 16, 18 jeweils ein stiftförmiges Klemmelement 57 auf. Das Klemmelement 57 ist zur Aufnahme in einer Ausnehmung 65 ausgebildet, wodurch ein axiales Verschieben der oberen Hälfte relativ zu der unteren Hälfte 15 verhindert werden soll (siehe Figur 5).

Auf der Innenseite der Flächen 16, 18 befinden sich beiderseits FührungsAusnehmungen 59, die mit korrespondierend geformten Führungsschienen 67 in Eingriff bringbar sind (siehe Figur 5).

Die in Figur 5 dargestellte Hygiene-Glocke 7 weist einen konischen Abschnitt 9 auf, auf dessen Innenseite die mit den Abstandshaltern 33, 35, 37 der Futterschale 5 korrespondierenden Zapfen 23 angeordnet sind (nicht dargestellt in Figur 5). Die untere Hälfte 15 des Zuführ- Verteilers 3 ist an einem oberen Abschnitt 63 der Hygiene-Glocke 7 einstückig mit der Hygiene-Glocke verbunden. Die vertikale Öffnung 21 zur Einleitung von Futtermitteln ist in Figur 5 ebenfalls zu erkennen. In der Figur unten links ist schließlich noch der Haken 25 zur Aufnahme in der Scharnieraufnahme 41, 43, 45 angedeutet. An den konischen Abschnitten 9 der Hygiene-Glocke 7 ist ein Kragen 61 angrenzend angeordnet. Der Kragen 61 dient der Begrenzung des Futtermittelaustritts in den ringförmigen Spalt 11 zwischen Futterschale 5 und Hygiene-Glocke 7 (siehe Figur 1).

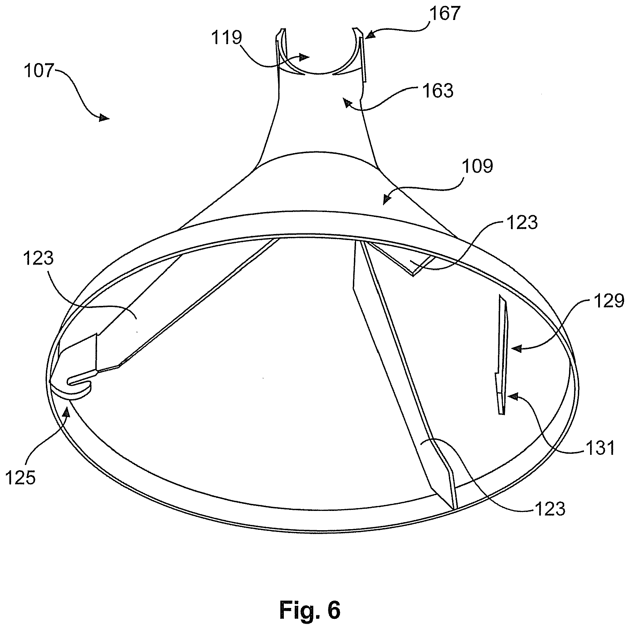

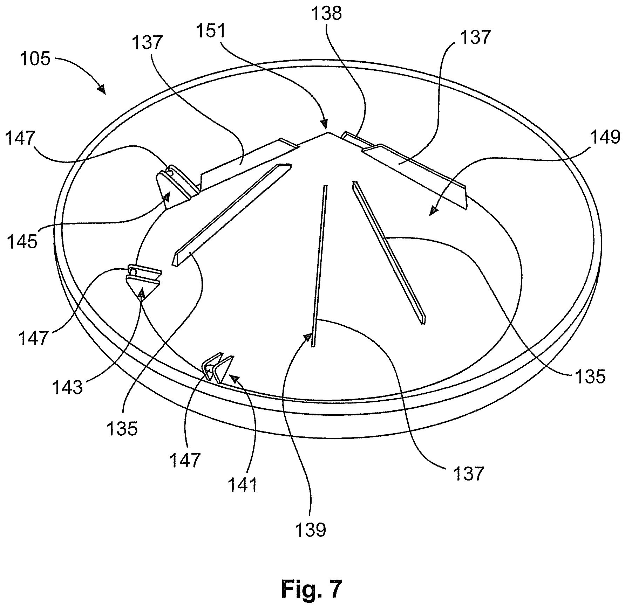

Figur 6 ist eine Hygiene-Glocke 107 gemäß einer alternativen Ausführungsform der erfindungsgemäßen Futtereinrichtung dargestellt. Die Hygiene-Glocke 107 weist einen konischen Abschnitt 109 auf. Entlang des konischen Abschnittes sind auf der Innenseite der Hygiene-Glocke 107 entlang des Umfangs gleichmäßig verteilt. Insgesamt drei als Stege 123 ausgebildete Abschnitte angeordnet. Die als Steg 123 ausgebildeten Abschnitte korrespondieren mit ebenfalls stegförmig ausgebildeten Abstandhaltern (siehe Figur 7). Unten in Figur 6 ist auf der linken Seite ein Haken 125 dargestellt. Der Haken 125 ist auf der Innenseite der Hygiene-Glocke 107 angeordnet. Auf einer dem Haken 125 gegenüberliegenden Seite der Hygiene-Glocke 107 ist weiterhin eine im Betriebszustand der Futtereinrichtung vertikal nach unten ausgerichtete Rastfeder 129 mit einem Widerhaken 131 vorgesehen. Die Rastfeder 129 ist einstückig mit der Hygiene-Glocke 107 verbunden. Hinsichtlich der Funktion des Widerhakens 131 und der Rastfeder 129 wird auf die Ausführungen zu Figur 2 verwiesen.

An einem oberen Abschnitt 163 der Hygiene-Glocke 107 ist eine untere Hälfte 115 eines Zuführ- Verteilers dargestellt. Die untere Hälfte 115 des Zuführ-Verteilers ist einstückig in dem oberen Abschnitt 163 der Hygiene-Glocke 107 ausgeformt. Beiderseitig der unteren Hälfte 115 angeordnete Vorsprünge 167 dienen zur formschlüssigen Verbindung der unteren Hälfte 115 mit einer (nicht dargestellten) oberen Hälfte des Zuführ-Verteilers.

In Figur 7 ist eine Futterschale 105 abgebildet, die insbesondere mit einer Hygiene-Glocke 107 gemäß Figur 6 in Verbindung bringbar ist. Die Futterschale 105 weist einen konischen Abschnitt 149 auf. Innerhalb des konischen Abschnitts 149 sind entlang des Umfangs mehrere Gruppen von Abstandshaltern angeordnet. Im Vergleich zu der Futterschale 5, die in Figur 3 abgebildet ist, sind vordergründig lediglich zwei Gruppen Abstandshalter zu erkennen. Es ist festzustellen, dass eine erste Gruppe Abstandshalter im Sinne der Betrachtung von Figur 3 nicht erkennbar ist. Allerdings ist der Abstand entlang des Umfangs zwischen Abstandshalter 135 und einem benachbarten Abstandshalter 137 nicht in beide Betrachtungsrichtungen gleichgroß. Es ist festzustellen, dass der Abstand zwischen einem Abstandshalter 135 und einem Abstandshalter 137 in die eine Richtung von dem Abstandshalter 135 aus doppelt so groß ist wie in die andere Richtung. Der Grund hierfür liegt darin, dass in dem Abstand, welcher den größeren Abstand zwischen den Abstandshaltern 135 und 137 entspricht, ein Abstandshalter der Höhe 0 vorgesehen ist. In praktischer Ausführung bedeutet dies, dass an der jeweiligen Stelle die korrespondierenden Abschnitte 123 (siehe Figur 6) direkt auf der Oberfläche des konischen Abschnitts 149 aufliegen. Insofern wird in Bezug auf die Gruppen der Abstandshalter 135 von der zweiten Gruppe gesprochen. Weiterhin wird konsequenterweise bei der Gruppe der Abstandshalter 137 von der dritten Gruppe gesprochen. Die Abstandshalter mit Ausnahme der ersten Gruppe weisen als Zentrierungshilfe eine in Richtung der stegförmigen Abstandshalter ausgebildete Nut auf, in welche die korrespondierenden Abschnitte 123 der Hygiene-Glocke 107 in Eingriff gebracht werden können. Entlang des Umfangs der Futterschale 105 sind weiterhin insgesamt drei Scharnieraufnahmen 141, 143, 145, angeordnet. Die Scharnieraufnahme 141 ist so angeordnet, dass die korrespondierenden Abschnitte 123 der Hygiene-Glocke 107 mit den (gedachten) Abstandshaltern der ersten Gruppe und somit mit dem konischen Abschnitt 149 direkt in Anlage kommen. Die zweite Scharnieraufnahme 143 ist dazu ausgebildet, den Haken 125 derart aufzunehmen, dass die Futterschale dann in eine feste Position zu der Hygiene-Glocke 107 gebracht werden kann, wenn die Abstandshalter 135 der zweiten Gruppe mit den korrespondierenden Abschnitten 123 der Hygiene-Glocke 107 gebracht sind. In analoger Weise ist die Scharnier-Aufnahme 145 so angeordnet, dass die Futterschale bei einer Übereinstimmung der Abstandshalter 137 der dritten Gruppe mit den korrespondierenden Abschnitten 123 der Hygiene-Glocke 107 in eine feste Position zu der Hygiene-Glocke gebracht werden kann. Im Übrigen ist in Figur 7 an einem oberen Ende des konischen Abschnittes 149 eine Spitze 151 zu erkennen. Futtermittel wird von dem (nicht dargestellten) Zuführ-Verteiler im Wesentlichen vertikal in das Volumen zwischen der Hygiene-Glocke 107 und der Futterschale 105 eingeleitet. Das Futtermittel trifft von oben kommend auf die Spitze 151 der Futterschale und wird so dann gleichmäßig zu allen Seiten über den Umfang der Futterschale 105 verteilt und nach unten geleitet. Die Stege 135, 139 unterstützen diese Gleitbewegung.

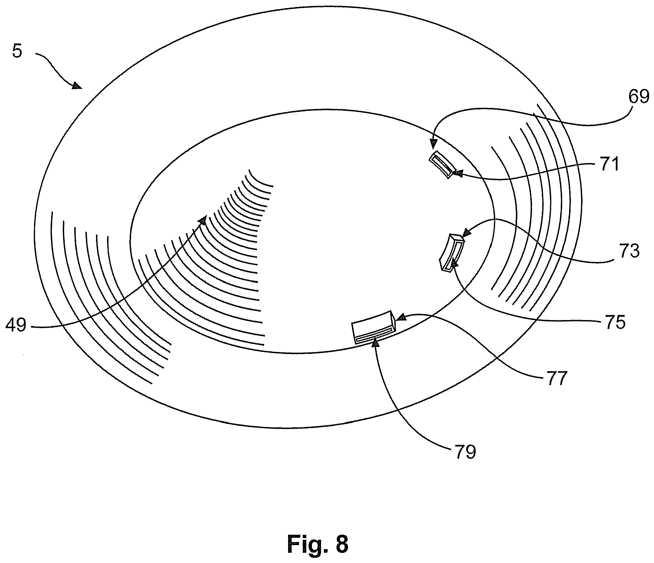

In Figur 8 ist schließlich eine Futterschale 5 dargestellt, die wahlweise mit einer der unterschiedlichen Hygiene-Glocken 7 oder 107 kombinierbar ist. Anhand von Figur 8 soll gezeigt werden, dass in dem konischen Abschnitt 49 entlang des Umfangs 3 Rastaufnahmen 69, 73, 77 einstückig ausgebildet sind. Die erste Rastaufnahme 69 ist dazu ausgebildet, eine Rastfeder aufzunehmen und deren Widerhaken hinter einer Ausnehmung 71 hintergreifend zu halten, wenn die Futterschale 5 mit einer ersten Gruppe von (nicht dargestellten) Abstandshaltern 33 in die korrespondierenden (nicht dargestellten) Abschnitte einer (nicht dargestellten) Hygiene-Glocke 7, 107 eingreift. In entsprechender Weise ist die zweite Rastaufnahme 73 dazu eingerichtet, in einer Ausnehmung 75 eine Rastfeder mit ihren Widerhaken hintergreifend aufzunehmen, sobald die Futterschale 5 mit ihren (nicht dargestellten) Abstandshaltern 35 der zweiten Gruppe in die korrespondierenden (nicht dargestellten) Abschnitte 43 einer der gezeigten Hygiene-Glocken eingreift.

Schließlich ist die dritte Ausnehmung 77 so in der Futterschale 5 ausgebildet, dass eine Rastfeder der Hygiene-Glocke mit ihrem Widerhaken dann in eine Ausnehmung 79 der Rastaufnahme 77 hintergreifend in Kontakt steht, wenn die (nicht dargestellten) Abstandshalter (37) der dritten Gruppe in Eingriff mit den (nicht dargestellten) korrespondierenden Anschnitten 45 in der (nicht dargestellten) Hygiene-Glocke 7, 107 in Eingriff gebracht sind.

## Patentansprüche

1. Futtereinrichtung (1) für Geflügel, insbesondere Hühner, mit
einem Zuführ-Verteiler (3), einer Futterschale (5), und einer die Futterschale (5) teilweise verschließenden Hygiene-Glocke (7), wobei zwischen der Hygiene-Glocke (7) und der Futterschale (5) ein Volumen zum Futtertransport aufgespannt ist,
**dadurch gekennzeichnet, dass** die Futterschale (5) eingelenkig mit der Hygiene-Glocke (7) verbindbar, insbesondere in die Hygiene-Glocke (7) einhängbar ist, sowie **gekennzeichnet durch** einen Rastmechanismus zum formschlüssigen Verbinden der Futterschale (5) mit der Hygiene-Glocke.

2. Futtereinrichtung (1) nach Anspruch 1,
**dadurch gekennzeichnet, dass** der Rastmechanismus eine einstückig in der Hygiene-Glocke ausgebildete Rastfeder (29, 129), (20), und eine einstückig in der Futterschale ausgebildete Rastaufnahme (69, 73, 77) aufweist.

3. Futtereinrichtung (1) nach einem der vorstehenden Ansprüche,
**dadurch gekennzeichnet, dass** innerhalb des Volumens zwischen der Futterschale (5) und der Hygiene-Glocke (7) mehrere Abstandshalter (33, 35, 37) angeordnet sind.

4. Futtereinrichtung (1) nach Anspruch 3,
**dadurch gekennzeichnet, dass** die Abstandshalter (33, 35, 37) in unterschiedlichen Längen ausgeführt sind, und in zwei oder mehreren Gruppen jeweils gleicher Abstandshalter einander zugeordnet sind.

5. Futtereinrichtung (1) nach Anspruch 4,
**dadurch gekennzeichnet, dass** die Abstandshalter (33, 35, 37) in einem konischen Abschnitt (49) der Futterschale (5) angeordnet sind, und dass eine Gruppe der Abstandshalter (33, 35, 37) formschlüssig mit korrespondierenden Abschnitten (23) in der Hygiene-Glocke (7) in Eingriff bringbar ist, während die restlichen Abstandshalter außer Eingriff mit den korrespondierenden Abschnitten (23) sind.

6. Futtereinrichtung (1) nach einem der Ansprüche 3 bis 5,
**dadurch gekennzeichnet, dass** die Abstandshalter (33, 35, 37) als Stege oder Zapfen ausgebildet sind.

7. Futtereinrichtung (1) nach einem der Ansprüche 3 bis 6,
**dadurch gekennzeichnet, dass** die Abstandshalter (33, 35, 37) eine Positionierhilfe aufweisen, insbesondere in Form eines Zentrier-Vorsprungs (39).

8. Futtereinrichtung (1) nach einem der Ansprüche 4 bis 7,
**dadurch gekennzeichnet, dass** für jede Stufeneinstellung des Abstands zwischen der Futterschale (5) und der Hygiene-Glocke (7) in einer Gruppe drei oder mehr Abstandshalter (33, 35, 37) vorgesehen sind, die vorzugsweise gleichmäßig entlang des Umfangs der Futterschale (5) angeordnet sind.

9. Futtereinrichtung (1) nach einem der Ansprüche 5 bis 8,
**dadurch gekennzeichnet, dass** die Hygiene-Glocke (7) einen konischen Abschnitt (9) aufweist, in welchem die mit den Abstandshaltern (33, 35, 37) korrespondierenden Abschnitte (23) angeordnet sind.

10. Futtereinrichtung (1) nach einem der vorstehenden Ansprüche,
**dadurch gekennzeichnet, dass** der Zuführ-Verteiler (3) als T-Stück ausgebildet ist mit zwei horizontalen Öffnungen (19) zum Anschluss an eine Futtermittel-Leitung sowie mit einer vertikalen Öffnung (21) zur Zuleitung von Futtermittel in Richtung der Futterschale (5), und zwei formschlüssig verbindbare Hälften (13, 15) aufweist.

11. Futtereinrichtung (1) nach Anspruch 10,
**dadurch gekennzeichnet, dass** eine untere Hälfte des Zuführ-Verteilers (3) einstückig in einem oberen Abschnitt (61) der Hygiene-Glocke (7) ausgeformt ist.

12. Futtereinrichtung (1) nach Anspruch 11,
**gekennzeichnet durch** einen dreiteiligen Aufbau, umfassend eine obere Hälfte (13) des Zuführ-Verteilers (3), die mit der oberen Hälfte (13) formschlüssig verbindbare Hygiene-Glocke (7), und die mit der Hygiene-Glocke (7) gelenkig verbindbare und mit dieser verrastbare Futterschale (5).

13. Futtereinrichtung (1) nach einem der vorstehenden Ansprüche,
**dadurch gekennzeichnet, dass** die Futtereinrichtung (1) vollständig aus Kunststoff, insbesondere aus Polycarbonat, Polypropylen, Polyethylen, oder Polyurethan besteht.

## Claims

1. Feeding device (1) for poultry, in particular chickens, comprising a feed distributor (3), a feeding bowl (5) and a hygiene bell (7) which partly closes the feeding bowl (5), wherein a space for transporting feed is formed between the hygiene bell (7) and the feeding bowl (5),
**characterised in that** the feeding bowl (5) can be connected by a single joint to the hygiene bell (7), in particular can be mounted on the hygiene bell (7) and **characterised by** a locking mechanism connecting the feeding bowl (5) to the hygiene bell (7) in a form-fitting manner.

2. Feeding device (1) according to claim 1, **characterised in that** the locking mechanism comprises a locking spring (29, 129) designed in one piece in the hygiene bell and a locking recess (69, 73, 77) formed in one piece in the feeding bowl.

3. Feeding device (1) according to any of the preceding claims, **characterised in that** a plurality of spacers (33, 35, 37) are arranged inside the space between the feeding bowl (5) and the hygiene bell (7).

4. Feeding device (1) according to claim 3, **characterised in that** the spacers (33, 35, 37) are designed to have different lengths and are assigned to one another in two or more groups of identical spacers respectively.

5. Feeding device (1) according to claim 4, **characterised in that** the spacers (33, 35, 37) are arranged in a conical section (49) of the feeding bowl (5), and **in that** a group of spacers (33, 35, 37) can be moved into engagement in a form-fitting manner with corresponding sections (23) in the hygiene bell (7), whilst the remaining spacers are not in engagement with the corresponding sections (23).

6. Feeding device (1) according to any of claims 3 to 5, **characterised in that** the spacers (33, 35, 37) are designed in the form of bars or studs.

7. Feeding device (1) according to any of claims 3 to 6, **characterised in that** the spacers (33, 35, 37) have a positioning aid, in particular in the form of a centring projection (39).

8. Feeding device (1) according to any of claims 4 to 7, **characterised in that** for each graduation of the distance between the feeding bowl (5) and the hygiene bell (7) in a group three or more spacers (33, 35, 37) are provided, which are preferably arranged evenly around the periphery of the feeding bowl (5).

9. Feeding device (1) according to any of claims 5 to 8, **characterised in that** the hygiene bell (7) has a conical section (9) in which the sections (23) corresponding with the spacers (33, 35, 37) are arranged.

10. Feeding device (1) according to any of the preceding claims,
**characterised in that** the feed-distributor (3) is designed in the form of a T-piece with two horizontal openings (19) for connecting to a feedstuff pipe and with a vertical opening (21) for supplying feedstuff in the direction of the feeding bowl (5) and has two halves (13, 15) which can be connected in a form-fitting manner.

11. Feeding device (1) according to claim 10, **characterised in that** a lower half of the feed-distributor (3) is formed in one piece in an upper section (61) of the hygiene bell (7).

12. Feeding device (1) according to claim 11, **characterised by** a three-part structure, comprising an upper half (13) of the feed-distributor (3), the hygiene bell (7) which can be connected in a form-fitting manner to the upper half (13) and the feeding bowl (5) which can be connected by a joint to the hygiene bell (7) and locked to the latter.

13. Feeding device (1) according to any of the preceding claims,
**characterised in that** the feeding device (1) is made completely of plastic, in particular of polycarbonate, polypropylene, polyethylene or polyurethane.

## Revendications

1. Dispositif d'alimentation (1) pour des volailles, en particulier pour des poules, avec
un distributeur d'amenée (3), une mangeoire (5) et une cloche hygiénique (7) fermant en partie la mangeoire (5), dans lequel un volume servant au transport d'aliments est formé entre la cloche hygiénique (7) et la mangeoire (5),
**caractérisé en ce que** la mangeoire (5) peut être reliée par une articulation unique à la cloche hygiénique (7), en particulier peut être suspendue dans la cloche hygiénique (7), caractérisé également par un mécanisme d'enclenchement servant à relier par complémentarité de forme la mangeoire (5) à la cloche hygiénique.

2. Dispositif d'alimentation (1) selon la revendication 1,
**caractérisé en ce que** le mécanisme d'enclenchement présente un ressort d'enclenchement (29, 129) réalisé d'un seul tenant dans la cloche hygiénique et un logement d'enclenchement (69, 73, 77) réalisé d'un seul tenant dans la mangeoire.

3. Dispositif d'alimentation (1) selon l'une quelconque des revendications précédentes,
**caractérisé en ce que** plusieurs écarteurs (33, 35, 37) sont disposés à l'intérieur du volume entre la mangeoire (5) et la cloche hygiénique (7).

4. Dispositif d'alimentation (1) selon la revendication 3,
**caractérisé en ce que** les écarteurs (33, 35, 37) sont réalisés dans des longueurs différentes et sont associés les uns aux autres en deux ou en plusieurs groupes respectivement d'écarteurs identiques.

5. Dispositif d'alimentation (1) selon la revendication 4,
**caractérisé en ce que** les écarteurs (33, 35, 37) sont disposés dans une section (49) conique de la mangeoire (5), et qu'un groupe des écarteurs (33, 35, 37) peut être amené en prise par complémentarité de forme avec des sections (23) correspondantes dans la cloche hygiénique (7), tandis que les écarteurs restants ne sont pas en prise avec les sections (23) correspondantes.

6. Dispositif d'alimentation (1) selon l'une quelconque des revendications 3 à 5,
**caractérisé en ce que** les écarteurs (33, 35, 37) sont réalisés sous la forme d'entretoises ou de tenons.

7. Dispositif d'alimentation (1) selon l'une quelconque des revendications 3 à 6,
**caractérisé en ce que** les écarteurs (33, 35, 37) présentent un système d'aide au positionnement, en particulier sous la forme d'une partie faisant saillie de centrage (39) .

8. Dispositif d'alimentation (1) selon l'une quelconque des revendications 4 à 7,
**caractérisé en ce que** sont prévus, pour chaque réglage progressif de la distance entre la mangeoire (5) et la cloche hygiénique (7), dans un groupe, trois écarteurs (33, 35, 37) ou plus, qui sont disposés de préférence de manière régulière le long de la périphérie de la mangeoire (5).

9. Dispositif d'alimentation (1) selon l'une quelconque des revendications 5 à 8,
**caractérisé en ce que** la cloche hygiénique (7) présente une section (9) conique, dans laquelle les sections (23) correspondant aux écarteurs (33, 35, 37) sont disposées.

10. Dispositif d'alimentation (1) selon l'une quelconque des revendications précédentes,
**caractérisé en ce que** le distributeur d'amenée (3) est réalisé sous la forme d'une pièce en T avec deux ouvertures horizontales (19) destinées à être raccordées à un conduit pour aliments ainsi qu'avec une ouverture verticale (21) servant à acheminer des aliments en direction de la mangeoire (5), et présente deux moitiés (13, 15) pouvant être reliées par complémentarité de forme.

11. Dispositif d'alimentation (1) selon la revendication 10,
**caractérisé en ce qu'**une moitié inférieure du distributeur d'amenée (3) est formée d'un seul tenant dans une section supérieure (61) de la cloche hygiénique (7).

12. Dispositif d'alimentation (1) selon la revendication 11,
**caractérisé par** une structure en trois parties, comprenant une moitié (13) supérieure du distributeur d'amenée (3), la cloche hygiénique (7) pouvant être reliée par complémentarité de forme à la moitié (13) supérieure et la mangeoire (5) pouvant être reliée de manière articulée à la cloche hygiénique (7) et pouvant être enclenchée avec cette dernière.

13. Dispositif d'alimentation (1) selon l'une quelconque des revendications précédentes,
**caractérisé en ce que** le dispositif d'alimentation (1) est constitué en totalité de plastique, en particulier de polycarbonate, de polypropylène, de polyéthylène ou de polyuréthane.
